(19) Europäisches Patentamt
European Patent Office
Office européen des brevets

(11) **EP 4 641 814 A1**

(12) **EUROPEAN PATENT APPLICATION**
published in accordance with Art. 153(4) EPC

(43) Date of publication:
29.10.2025   Bulletin 2025/44

(21) Application number: 24795476.1

(22) Date of filing: 24.01.2024

(51) International Patent Classification (IPC):
*H01M 50/533* (2021.01)    *H01M 50/528* (2021.01)

(52) Cooperative Patent Classification (CPC):
Y02E 60/10

(86) International application number:
**PCT/CN2024/073838**

(87) International publication number:
**WO 2024/222087 (31.10.2024 Gazette 2024/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 26.04.2023   CN 202310458517

(71) Applicant: **Contemporary Amperex Technology
Co., Limited
Ningde, Fujian 352100 (CN)**

(72) Inventors:
• **LIU, Huanji
Ningde, Fujian 352100 (CN)**
• **LI, Xuan
Ningde, Fujian 352100 (CN)**
• **LIN, Kui
Ningde, Fujian 352100 (CN)**
• **SUN, Xin
Ningde, Fujian 352100 (CN)**
• **YE, Yonghuang
Ningde, Fujian 352100 (CN)**
• **JIN, Haizu
Ningde, Fujian 352100 (CN)**

(74) Representative: **Laufhütte, Dieter
Lorenz Seidler Gossel
Rechtsanwälte Patentanwälte
Partnerschaft mbB
Widenmayerstraße 23
80538 München (DE)**

(54) **BATTERY CELL, BATTERY AND ELECTRICAL DEVICE**

(57)    The present application belongs to the technical field of batteries, and provides a battery cell, a battery, and an electric device. The battery cell includes an electrode body, tabs, and connectors. The tab has a first side edge and a second side edge opposite to each other, the first side edge of the tab is connected to the electrode body, and the connector is connected to the second side edge of the tab. A bending portion is provided between the first side edge and the second side edge of the tab. According to the battery cell provided in the present application, the possibility that the tab is pulled and broken when the battery cell expands can be reduced, thereby improving the reliability of the battery cell.

FIG. 1

## Description

### CROSS REFERENCE

The present application makes reference to Chinese Patent Application No. 202310458517.4 filed on April 26, 2023 and entitled "Battery Cell, Battery, and Electric device", which is incorporated herein by reference in its entirety.

### TECHNICAL FIELD

The present application relates to the field of battery technologies, and in particular, to a battery cell, a battery, and an electric device.

### BACKGROUND

Energy conservation and emission reduction are the key to the sustainable development of the automotive industry, and electric vehicles have become an important component of the sustainable development of the automotive industry due to energy saving and environment protection advantages thereof. For electric vehicles, a battery technology is an important factor for the development thereof.

During charging and discharging of a battery, the battery cell may expand, which affects the reliability of the battery. In the development of battery technologies, how to improve the reliability of a battery is a technical problem to be solved in the battery technologies.

### SUMMARY

The present application aims to solve at least one of the technical problems described in the Background. In view of this, one objective of the present application is to provide a battery cell, a battery, and an electric device, to improve the battery safety problem caused by expansion of the battery cell.

In a first aspect, an embodiment of the present application provides a battery cell, including: an electrode body; tabs each having a first side edge and a second side edge opposite to each other, the first side edge of the tab being connected to the electrode body; and connectors each connected to the second side edge of the tab, where a bending portion is provided between the first side edge and the second side edge of the tab.

In the technical solution of the embodiment of the present application, the bending portion is provided between the first side edge and the second side edge of the tab, so that the tab is capable of being in a relaxed state; when the electrode body expands, a distance between the first side edge and the second side edge of the tab increases; and when the tab changes from the relaxed state to a tensioned state, the bending portion can provide a part of the length to offset a distance difference after the distance between the first side edge and the second side edge increases, which can reduce the pulling of the tab to a certain extent and reduce the possibility of the tab being pulled and broken, thereby improving the reliability of the battery cell.

In some embodiments, a first dimension L of the tab and a first distance L1 between the electrode body and the connector satisfy the following relationship:

$$\frac{L - L1}{L} \leq 0.35$$, where the first dimension L is an extension length of the tab from a side where the first side edge is located to a side where the second side edge is located. If L - L1 is too large, it indicates that the first distance L1 between the electrode body and the connector is too short, and the electrode body is close to the connector. During expansion of the electrode body, the tab may be caused to abut against the connector, so that the tab is bent to one side of the electrode body, and the tab is in contact with the negative electrode sheet and the positive electrode sheet to cause a short circuit. The first dimension L and the first distance L1 are set to satisfy the above relational expression, so that the pulling of the tab can be reduced, and the risk of a short circuit of the battery cell can be reduced to a certain extent, thereby improving the reliability of the battery cell.

In some embodiments, the first dimension L and the first distance L1 satisfy the following relationship: 1.05L1 ≤ L ≤ 1.2L 1. The relationship between the first dimension L and the first distance L1 is further defined, which can not only further reduce the pulling of the tab, but also further reduce the risk of a short circuit of the battery cell, thereby improving the reliability of the battery cell.

In some embodiments, the electrode body has a first preset thickness D1 and a second preset thickness D2, and an expansion coefficient Ky of the electrode body is defined as: $$Ky = \frac{D2 - D1}{D1}$$, where 0.04 ≤ Ky ≤ 0.23, the first preset thickness D1 is a thickness of the electrode body when the battery cell is discharged at a first preset discharge rate until a state of charge is less than or equal to 5%, and the second preset thickness D2 is a thickness of the electrode body when the battery cell is charged at a first preset charge rate until the state of charge is greater than or equal to 95%. When the expansion coefficient Ky of the electrode body is small, it indicates that the content of a high-expansion material in the electrode body is relatively low, resulting in a low energy density of the battery cell. When the expansion coefficient Ky of the electrode body is large, it may cause excessive expansion of the electrode body. In this embodiment of the present application, the expansion coefficient Ky of the electrode body is set within the above range, thereby preventing excessive expansion of the electrode body after charging while increasing the energy density of the battery cell.

In some embodiments, 0.12 ≤ Ky ≤ 0.215. The energy density of the battery cell can be further increased, and excessive expansion of the electrode body 10 can be prevented.

In some embodiments, the electrode body has a first preset length C1 and a second preset length C2, and an extension coefficient Kx of the electrode body is defined as: $Kx = \dfrac{C2 - C1}{C1}$, where $0.001 \leq Kx \leq 0.025$, the first preset length C1 is a length of the electrode body when the battery cell is discharged at a second preset discharge rate until the state of charge is less than or equal to 5%, and the second preset length C2 is a length of the electrode body when the battery cell is charged at a second preset charge rate until the state of charge is greater than or equal to 95%. When the extension coefficient Kx of the electrode body is small, it indicates that the content of the high-expansion material in the electrode body is relatively low, resulting in a low energy density of the battery cell. When the extension coefficient Kx of the electrode body is large, it may cause excessive expansion of the electrode body. In this embodiment of the present application, the extension coefficient Kx of the electrode body is set within the above range, thereby preventing excessive expansion of the electrode body while increasing the energy density of the battery cell.

In some embodiments, $0.005 \leq Kx \leq 0.021$. The energy density of the battery cell can be further increased, and excessive expansion of the electrode body can be prevented.

In some embodiments, a second distance L2 between the electrode body and the connector and the extension coefficient Kx of the electrode body satisfy the following relational expression: $L2 = L1 - a \times C1 \times Kx$, where the second distance L2 between the electrode body and the connector is a distance between the electrode body and the connector when the length of the electrode body is equal to the second preset length C2, and a is greater than or equal to 0.5 and less than or equal to 1. C1×Kx is an extension length of the electrode body, that is, a difference of C2 - C1. Since the length of a housing is constant, the distance between the electrode body and the connector after the electrode assembly extends, that is, the second distance L2, can be calculated by subtracting the extension length of the electrode body from the first distance L1.

In some embodiments, the second distance L2 is greater than or equal to 10 mm. The second distance L2 is defined to be greater than or equal to 10 mm, so that there is a distance between the electrode body and the connector after the electrode body extends, which can prevent the compression between the electrode body and the connector from affecting the reliability of the battery cell to a certain extent.

In some embodiments, an elongation at break K1 of the tab and an elongation K2 of the tab satisfy the following relationship: $\dfrac{K1}{20} \leq K2 \leq \dfrac{K1}{5}$. In this way, when the battery cell expands, the tab is not pulled too much, thereby avoiding the breakage of the tab.

In some embodiments, the elongation K2 of the tab, the second distance L2, the second preset thickness D2, the first preset thickness D1, and the first dimension L satisfy:

$$K2 = \sqrt{(b \times L2^2 + D2^2) / (b \times L^2 + D1^2)} - 1 ,$$

where b is greater than or equal to 1 and less than or equal to 4. The elongation K2 of the tab can be calculated by the above formula.

In some embodiments, the elongation at break K1 of the tab satisfies: $1.4\% \leq K1 \leq 5\%$. On one hand, the tab has a certain elongation, so that the tab is not pulled and broken when the battery cell starts to expand. On the other hand, the elongation of the tab is not so excessive as to affect the performance of the tab.

In some embodiments, the elongation K2 of the tab satisfies: $0.07\% \leq K2 \leq 1\%$. On one hand, the tab has a certain elongation to offset the pulling of the tab when the battery cell expands. On the other hand, the tab can be prevented from being broken prematurely due to defects caused by incoming materials or cutting before reaching the elongation at break.

In some embodiments, the electrode body includes a positive electrode sheet with an elongation K3 satisfying: $1\% \leq K3 \leq 2.5\%$. On one hand, the positive electrode sheet elongates when the battery cell expands, to meet the requirement of the dimension of the battery cell after expansion. On the other hand, it can be avoided to a certain extent that the battery cell expands too much to affect the reliability of the battery cell.

In some embodiments, the electrode body further includes a separator, where the separator is laminated with the positive electrode sheet, and a first height H1 of the separator, a second height H2 of the positive electrode sheet, and the elongation K3 of the positive electrode sheet satisfy: $\dfrac{H1 - (1 + K3)H2}{2} \geq 3mm$, where the first height H1 of the separator is a dimension of the separator in a height direction Z of the battery cell, and the second height H2 of the positive electrode sheet is a dimension of the positive electrode sheet in the height direction Z of the battery cell. In this way, after the battery cell expands, the first height H1 of the separator is still greater than the second height H2 of the positive electrode sheet, so that the dimension of the positive electrode sheet does not exceed the dimension of the separator, and the problem of a short circuit caused by contact between the positive electrode sheet and the negative electrode sheet after the positive electrode sheet expands can be avoided to some extent.

In some embodiments, the first height H1 of the separator, the second height H2 of the positive electrode sheet, the elongation K3 of the positive electrode sheet, and the second distance L2 between the electrode body and the connector satisfy:

$$\frac{H1 - (1 + K3)H2}{2} \leq L2$$

, where the second distance L2 between the electrode body and the connector is a distance between the electrode body and the connector when the length of the electrode body is equal to the second preset length C2, and the second preset length C2 is a length of the electrode body when the battery cell is charged at the second preset charge rate until the state of charge is greater than or equal to 95%. The larger H1 - (1 + K3) H2 is, the more the separator exceeds the positive electrode sheet, and the larger the dimension of the separator 12 is, so that the separator is likely to abut against the connector after the battery cell expands, causing the separator to bend. By defining the above relational expression, the bending of the separator caused by the larger dimension of the separator can be avoided to a certain extent.

In some embodiments, the electrode body includes a positive electrode sheet, where the positive electrode sheet includes a high-expansion material with a mass percentage of greater than or equal to 25% and less than or equal to 100%. Through the percentage of a silicon-based material in the positive electrode sheet, the energy density of the battery cell can be effectively increased, thereby improving the performance of the battery cell.

In some embodiments, the mass percentage of the high-expansion material is greater than or equal to 25% and less than or equal to 50%. By further selecting the percentage of the silicon-based material in an active material of the positive electrode sheet, the stability and reliability of the battery cell are improved while the energy density of the battery cell is ensured to some extent.

In a second aspect, an embodiment of the present application provides a battery comprising the battery cell provided in the above embodiments.

In a third aspect, an embodiment of the present application provides an electric device, including the battery in the above embodiment that is configured to provide electric energy; or including the battery cell in any one of the above embodiments that is configured to provide electric energy.

The above description is merely an overview of the technical solutions of the present application. For a clearer understanding of the technical means of the present application, the present application can be carried out in accordance with the content of the description, and in order to make the above and other objectives, characteristics, and advantages of the present application apparent and comprehensible, specific embodiments of the present application are described below.

DESCRIPTION OF DRAWINGS

In the drawings, the same reference sign represents the same or similar components or elements throughout a plurality of drawings unless otherwise specified. The drawings are not necessarily drawn to scale. It should be understood that these drawings depict only some embodiments disclosed in accordance with the present application and are not to be considered as limiting the scope of the present application.

FIG. 1 is a schematic structural diagram of a battery cell provided in some embodiments of the present application;

FIG. 2 is a top view of a battery cell provided in some embodiments of the present application;

FIG. 3 is a front view of a battery cell provided in some embodiments of the present application;

FIG. 4 is a schematic structural diagram of a battery cell provided in some other embodiments of the present application;

FIG. 5 is a right view of a battery cell provided in some embodiments of the present application;

FIG. 6 is a front view of a battery cell provided in some embodiments of the present application;

FIG. 7 is a structural diagram of a battery cell provided in some embodiments of the present application in a state;

FIG. 8 is a structural diagram of a battery cell provided in some embodiments of the present application in another state; and

FIG. 9 is a partial schematic diagram of an electrode body provided in some embodiments of the present application.

DESCRIPTION OF EMBODIMENTS

Embodiments of the technical solutions of the present application are described in detail below with reference to the drawings. The following embodiments are only used to more clearly illustrate the technical solutions of the present application, and thus are used as examples only, and are not intended to limit the protection range of the present application.

Unless defined otherwise, all technical and scientific terms used herein have the same meaning as commonly understood by a person skilled in the art to which the present application belongs; the terms used herein are used for describing particular embodiments only and are not intended to limit the present application;

and the terms "comprising", "including", and "having" and any variations thereof in the description, claims and the above drawings of the present application are intended to cover non-exclusive inclusion.

In the description of the embodiments of the present application, the technical terms "first", "second", and the like are used only for distinguishing between different objects, but cannot be construed to indicate or imply relative importance or implicitly indicate the number, specific order, or primary/secondary relationship of indicated technical features. In the description of the embodiments of the present application, "a plurality of" means two or more unless specifically defined otherwise.

Reference to "an embodiment" herein means that a particular feature, structure, or characteristic described with reference to the embodiment can be included in at least one embodiment of the present application. The phrase in various places in the description does not necessarily all refer to the same embodiment, or a separate or alternative embodiment mutually exclusive of other embodiments. It is explicitly and implicitly understood by a person skilled in the art that the embodiments described herein may be combined with other embodiments.

In the description of the embodiments of the present application, the term "and/or" merely describes an association relationship of associated objects, indicating that three relationships may exist, for example, A and/or B may mean that A exists alone, A and B exist simultaneously, or B exists alone. In addition, the character "/" herein generally indicates that associated objects are in a "or" relationship.

In the description of the embodiments of the present application, the term "a plurality of" means two or more (including two), and similarly, the term "a plurality of groups" means two or more groups (including two groups), and the term "a plurality of pieces" means two or more pieces (including two pieces).

In the description of the embodiments of the present application, orientations or positional relationships indicated by the technical terms such as "center", "longitudinal", "transverse", "length", "width", "thickness", "upper", "lower", "front", "rear", "left", "right", "vertical", "horizontal", "top", "bottom", "inner", "outer", "clockwise", "counter-clockwise", "axial", "radial", "circumferential", and the like are based on orientations or positional relationships shown in the drawings, and are merely for convenience of description of the embodiments of the present application and simplified description, and do not indicate or imply that an indicated apparatus or element must have a specific orientation or be configured and operated in a specific orientation, and thus should not be construed as limitations on the embodiments of the present application.

In the description of the embodiments of the present application, unless explicitly specified and defined otherwise, the terms "mount", "couple", "connect", and "fasten" should be broadly understood, for example, they may be a fixed connection, a detachable connection, or an integral connection; or may be a mechanical connection, or an electrical connection; or may be a direct connection, or an indirect connection via an intermediate medium, or an internal communication between two elements or interaction between two elements. A person of ordinary skill in the art may understand the specific meanings of the above terms in the embodiments of the present application according to specific situations.

At present, in view of the development of the market, the use of power batteries is becoming increasingly more widespread. Power batteries are used not only in energy storage power systems such as hydropower, thermal power, wind power, and solar power plants, but also in electric tools such as electric bicycles, electric motorcycles, and electric vehicles, as well as military equipment, aerospace, and many other fields. As an application field of power batteries continues to expand, a market demand for power batteries continues to increase.

A battery cell includes a positive electrode sheet, a negative electrode sheet, and a separator located between the positive electrode sheet and the negative electrode sheet, where the positive electrode sheet is coated with a positive electrode active material, the negative electrode sheet is coated with a negative electrode active material, and the separator is configured to separate the positive electrode sheet from the negative electrode sheet. As ions are intercalated into or deintercalated from the positive electrode active material and the negative electrode active material during charge-discharge cycles of a battery, the battery cell swells, that is, the positive electrode sheet and the negative electrode sheet expand outwards. The expansion of the electrode sheets imposes adverse impacts on the performance and service life of the battery. The expansion of the electrode sheets may cause the tab to be pulled, resulting in the tearing of the tab and the like.

In order to alleviate the problem of the influence of expansion of the electrode sheets on the reliability of the battery, the tab may be designed to be in a relaxed state before the battery expands, which avoids the problem that the tab may be pulled and broken due to the expansion of the electrode body to a certain extent, thereby improving the reliability of the battery cell.

The battery cell disclosed in the embodiments of the present application may be, but not limited to, used in an electric device such as a vehicle, a ship, or an aircraft. A power supply system of the electric device with the battery cell, the battery, and the like disclosed in the present application may be used. In this way, it is beneficial to reduce the possibility of the tab being pulled, thereby improving the reliability of the battery cell.

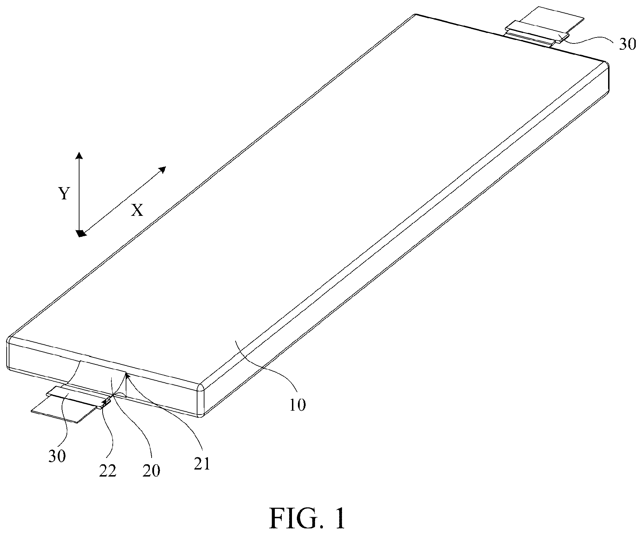

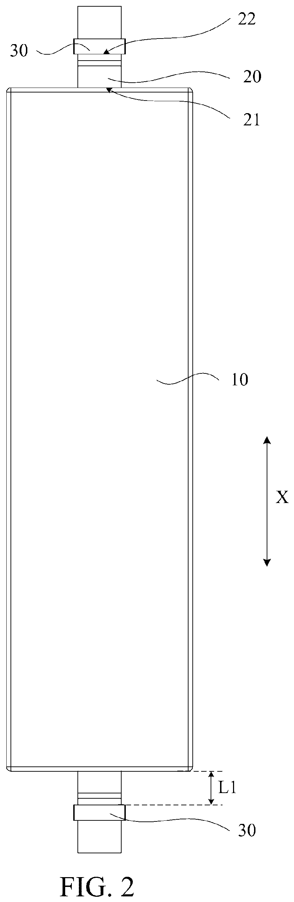

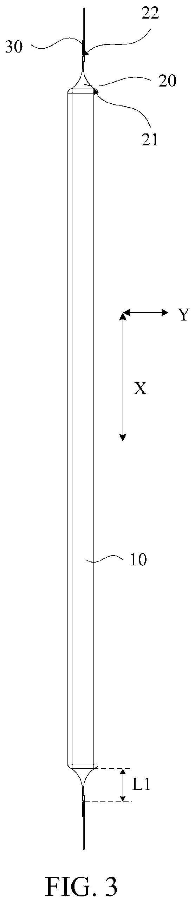

An embodiment of the present application provides a battery cell. FIG. 1 is a schematic structural diagram of a battery cell provided in some other embodiments of the present application. FIG. 2 is a top view of a battery cell provided in some embodiments of the present application. FIG. 3 is a front view of a battery cell provided in some embodiments of the present application. Referring to FIG. 1 to FIG. 3, the battery cell includes an electrode body 10, tabs 20, and connectors 30. The tab 20 has a first side edge 21 and a second side edge 22 opposite to each other, where the first side edge 21 of the tab 20 is connected to the electrode body 10, and the connector 30 is connected to the second side edge 22 of the tab 20.

A bending portion is provided between the first side edge 21 and the second side edge 22 of the tab 20.

In this embodiment of the present application, the battery cell may include a nickel-cadmium battery cell, a nickel-hydrogen battery cell, a lithium-ion battery cell, and a secondary alkaline zinc-manganese battery cell. The battery cell includes an electrode body 10 and tabs 20. The thickness of the electrode body 10 is associated with a charge rate and a state of charge of the battery cell. The thickness of the electrode body 10 changes with the variation of the charge rate and the state of charge of the battery cell. Generally, at a fixed charge rate, the thickness of the electrode body 10 increases with the increase of the state of charge.

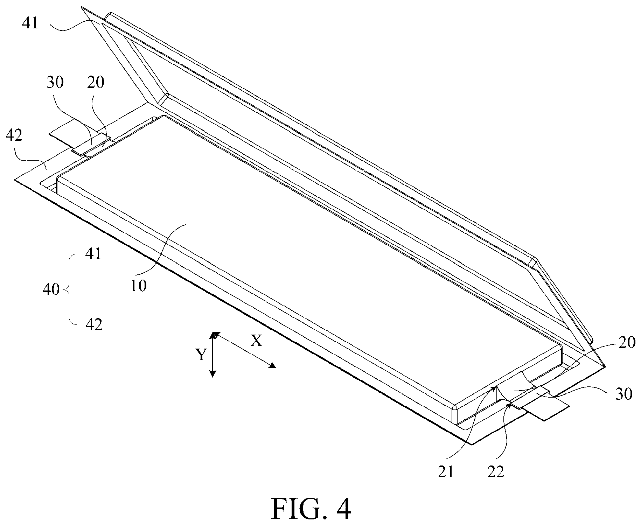

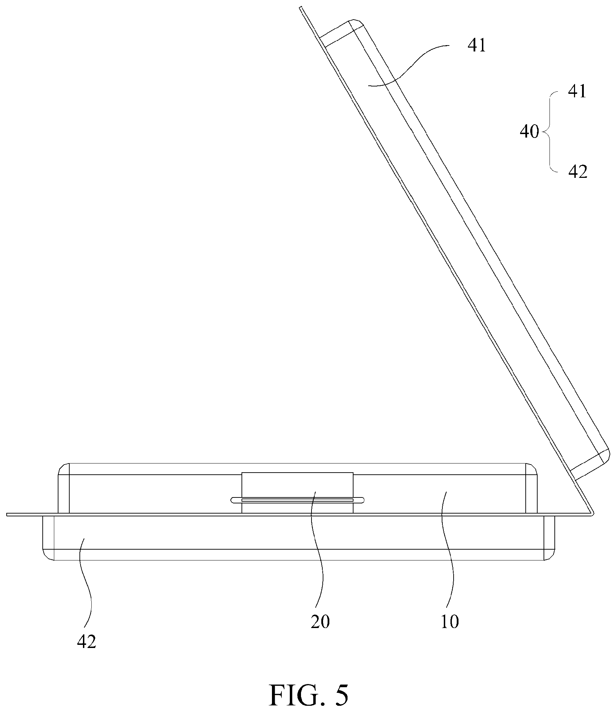

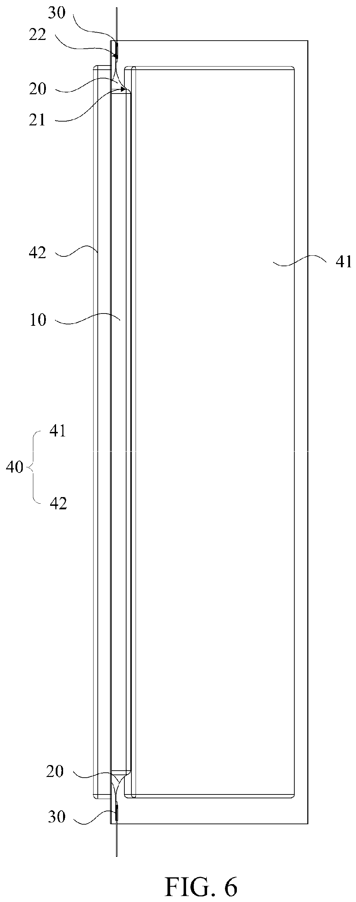

FIG. 4 is a schematic structural diagram of a battery cell provided in some other embodiments of the present application. FIG. 5 is a right view of a battery cell provided in some embodiments of the present application. FIG. 6 is a front view of a battery cell provided in some embodiments of the present application. Referring to FIG. 4 to FIG. 6, the battery cell includes a housing 40, where the electrode body 10 is located in an inner cavity of the housing 40. The battery cell may further include other functional components. In order to clearly show the electrode body 10, the housing 40 in FIG. 4 to FIG. 6 is in an open state, and in other embodiments, the housing 40 may be in a closed state.

In some embodiments of the present application, the housing 40 includes a first portion 41 and a second portion 42 that cover each other. In an example, the first portion 41 and the second portion 42 have the same shape and are each formed with a semi-cavity, and when the two portions are joined together, a complete and sealed accommodating cavity can be formed. In another example, the second portion 42 is formed with an accommodating cavity, the first portion 41 is in the shape of a flat plate, and the first portion 41 is connected to the second portion 42 with the accommodating cavity in a covering manner, so that the accommodating cavity forms a sealed cavity body. The first portion 41 may be an end cover, and the second portion 42 may be a housing body.

The end cover is a component that covers an opening of the housing body to insulate an internal environment of the battery cell from an external environment. Without limitation, the shape of the end cover may adapt to the shape of the housing body to fit the housing body. For example, the end cover may be made of a material with certain hardness and strength (e.g., aluminum alloy). In this way, the end cover is less prone to deformation under compressive impact, thereby enabling the battery cell to have higher structural strength and improved reliability. The end cover may be provided with a functional component such as an electrode terminal. The electrode terminal may be configured to be electrically connected to the electrode body 10 for outputting electric energy from or inputting electric energy to the battery cell. In some embodiments, the end cover may further be provided with a pressure relief mechanism for relieving internal pressure when the internal pressure or temperature of the battery cell reaches a threshold. The end cover may also be made of various materials, such as copper, iron, aluminum, stainless steel, aluminum alloy, and plastic, which are not specially limited in this embodiment of the present application. In some embodiments, an insulating component may further be disposed on an inner side of the end cover, and the insulating component may be configured to isolate an electrical connection component in the housing body from the end cover to reduce the risk of a short circuit. For example, the insulating component may be plastic, rubber, etc.

The housing body is a component configured to cooperate with the end cover to form an internal environment of the battery cell, where the formed internal environment may be used to accommodate the electrode body 10, an electrolyte solution, and other components. The housing body and the end cover may be separate components. An opening may be formed in the housing body. The opening is covered by the end cover to form the internal environment of the battery cell. Without limitation, the end cover and the housing body may also be integrated. Specifically, the end cover and the housing body may form a joint connection surface before other components are fitted into the housing, and then the end cover is enabled to cover the housing body when an interior of the housing body needs to be enclosed. The housing body may be in various shapes and various dimensions, such as a cuboid shape, a cylindrical shape, and a hexagonal prism shape. Specifically, the shape of the housing body may be determined based on the specific shape and dimension of the electrode body 10. The housing body may be made of various materials, such as copper, iron, aluminum, stainless steel, aluminum alloy, and plastic, which are not specially limited in this embodiment of the present application.

The electrode body 10 is a component in the battery cell where an electrochemical reaction occurs. The housing body may include one or more electrode bodies 10 inside. The electrode body 10 is mainly formed by winding or laminating a positive electrode sheet and a negative electrode sheet, and a separator is generally disposed between the positive electrode sheet and the negative electrode sheet. Parts of the positive electrode sheet and the negative electrode sheet with active materials form the electrode body 10, and parts of the positive electrode sheet and the negative electrode sheet without active materials each form a tab 20. A positive electrode tab and a negative electrode tab may both be located at one end of a main body portion or be located at two ends of a main body portion respectively. During the charge-discharge process of a battery, the positive electrode active material and the negative electrode active material react with the electrolyte solution, and the tab 20 is connected to the electrode terminal to form a current circuit.

As shown in FIG. 1 to FIG. 3, the first side edge 21 of the tab 20 is connected to the electrode body 10, the second side edge 22 of the tab 20 may be welded to the connector 30 by means of welding, and the connector 30 may be connected to the electrode terminal to achieve an electrical connection between the tab 20 and the electrode terminal.

For example, when the battery cell includes a plurality of tabs 20, the second side edges 22 of the tabs 20 may be welded together, and the connector 30 may be a welding portion, that is, the second side edges 22 of the plurality of tabs 20 constitute the connector.

In some other embodiments of the present application, the connector 30 may be a welding component, and the second side edges 22 of the plurality of tabs 20 may be welded together with the welding component.

In this embodiment of the present application, the connector 30 is fixed, that is, the second side edge 22 of the tab 20 is fixed. The first side edge 21 of the tab 20 is a position of the first side edge 21 of the tab 20 when the first side edge 21 of the tab 20 is connected to the electrode body 10, and the second side edge 22 of the tab 20 is a position of the second side edge 22 of the tab 20 when the second side edge 22 of the tab 20 is fixedly connected.

When the battery cell expands, the electrode body 10 extends toward the connector 30, so that the distance between the electrode body 10 and the connector 30 decreases, that is, the distance between the electrode body 10 and the connector 30 changes with the variation of the thickness of the electrode body 10. The distance between the electrode body 10 and the connector 30 decreases as the thickness of the electrode body 10 increases. However, the thickness of the electrode body 10 will also increase, and for a tab 20 located on an outer side, a distance between the first side edge 21 and the second side edge 22 of the tab 20 will increase.

In this embodiment of the present application, the first distance L1 between the electrode body 10 and the connector 30 is a distance between the electrode body 10 and the connector 30 when the battery cell is discharged at a first preset discharge rate until the state of charge is less than or equal to 5%.

In this embodiment of the present application, the charge rate is a measure of the charging speed, which refers to a current required for charging the battery cell to its rated capacity within a specified time, and is numerically equal to a multiple of the rated capacity of the battery cell, that is, "charging current/rated capacity of battery cell = charge rate". The state of charge is a ratio of the rated capacity of the battery cell to the capacity of the battery cell in a fully charged state, usually represented by a percentage.

For example, the temperature during charging and discharging is greater than or equal to 20°C and less than or equal to 30°C.

In this embodiment of the present application, the tab 20 may include a positive electrode tab and a negative electrode tab, the positive electrode tab and the negative electrode tab may both be located at one end of the electrode body 10 or be located at two ends of the electrode body 10 respectively, and meanwhile, there may be a plurality of tabs 20. The side where the first side edge 21 of the tab 20 is located is a position of the first side edge 21 of the tab 20 on the electrode body 10 when the tab 20 is connected to the electrode body 10, the side where the second side edge 22 of the tab 20 is located is a position of the second side edge 22 of the tab 20 when the second side edge is fixedly connected, and the first dimension L of the tab 20 is an extension length of the tab 20 from the side where the first side edge 21 is located to the side where the second side edge 22 is located, that is, an actual length of the tab 20.

In this embodiment of the present application, the first dimension L of the tab 20 is an extension length from the side where the first side edge 21 is located to the side where the second side edge 22 is located when the tab 20 is not pulled.

In this embodiment of the present application, the bending portion is provided between the first side edge 21 and the second side edge 22 of the tab 20, so that the tab 20 is capable of being in a relaxed state; when the electrode body 10 expands, the distance between the first side edge 21 and the second side edge 22 of the tab 20 increases; and when the tab 20 changes from the relaxed state to a tensioned state, the bending portion can provide a part of the length to offset a distance difference after the distance between the first side edge 21 and the second side edge 22 increases, which can reduce the pulling of the tab 20 to a certain extent and reduce the possibility of the tab 20 being pulled and broken, thereby improving the reliability of the battery cell.

In this embodiment of the present application, the bending portion is provided between the first side edge 21 and the second side edge 22 of the tab 20, so that the first dimension L of the tab 20 is greater than the first distance L1 between the electrode body 10 and the connector 30, which can be understood that a part of the tab 20 contracts toward the electrode body 10, and correspondingly the dimension of the housing 40 can be slightly reduced, thereby reducing the volume of the battery cell, and increasing the energy density of the battery cell.

According to some embodiments of the present application, the first dimension L and the first distance L1 satisfy the following relationship: $\dfrac{L - L1}{L} \leq 0.35$ .

In this embodiment of the present application, for the battery cell, the first dimension L of the tab 20 is unchanged, and the larger L - L1 is, the shorter the first distance L1 between the electrode body 10 and the connector 30 is.

In this embodiment of the present application, the above relational expression can be converted into

$$L \leq \frac{20 \times L1}{13}.$$

In this embodiment of the present application, if L - L1 is too large, it indicates that the first distance L1 between the electrode body 10 and the connector 30 is too short, and the electrode body 10 is close to the connector 30. During expansion of the electrode body 10, the tab 20 may be caused to abut against the connector 30, so that the tab 20 is bent to one side of the electrode body 10, and the tab 20 is in contact with the negative electrode sheet and the positive electrode sheet to cause a short circuit. The first dimension L and the first distance L1 are set to satisfy the above relational expression, so that the pulling of the tab 20 can be reduced, and the risk of a short circuit of the battery cell can be reduced to a certain extent, thereby improving the reliability of the battery cell.

In this embodiment of the present application, the first dimension L and the first distance L1 satisfy the following relationship: $1.05L1 \leq L \leq 1.2L1$.

In this embodiment of the present application, the relationship between the first dimension L and the first distance L1 is further defined, which can not only further reduce the pulling of the tab 20, but also further reduce the risk of a short circuit of the battery cell, thereby improving the reliability of the battery cell.

According to some embodiments of the present application, the electrode body 10 has a first preset thickness D1, where the first preset thickness D1 is a thickness of the electrode body 10 when the battery cell is discharged at a first preset discharge rate until the state of charge is less than or equal to 5%.

In this embodiment of the present application, the thickness of the electrode body 10 when the battery cell is discharged at the first preset discharge rate until the state of charge is less than or equal to 5% can be understood as the thickness of the electrode body 10 when the battery cell is discharged at the first preset discharge rate until the state of charge is equal to 5%, 4%, 3%, or any other value less than 5%.

For example, the first preset discharge rate is C/3.

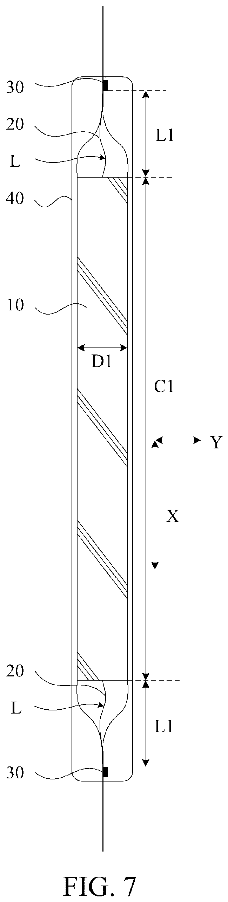

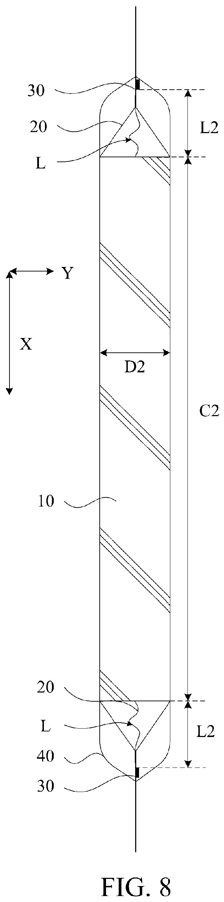

FIG. 7 is a structural diagram of a battery cell provided in some embodiments of the present application in a state. FIG. 8 is a structural diagram of a battery cell provided in some embodiments of the present application in another state. In FIG. 7, the thickness of the electrode body 10 is equal to the first preset thickness D1, and in FIG. 8, the thickness of the electrode body 10 is equal to a second preset thickness D2, where D2 is greater than D1.

According to some embodiments of the present application, the electrode body 10 has a second preset thickness D2, and an expansion coefficient Ky of the electrode body 10 is defined as: $Ky = \dfrac{D2 - D1}{D1}$, where $0.04 \leq Ky \leq 0.23$, and the second preset thickness D2 is a thickness of the electrode body 10 when the battery cell is charged at a first preset charge rate until the state of charge is greater than or equal to 95%.

In this embodiment of the present application, the electrode body 10 expands after charging, and the thickness of the electrode body 10 increases, that is, the second preset thickness D2 is greater than the first preset thickness D1. The thickness of the electrode body can be measured directly.

In this embodiment of the present application, the thickness of the electrode body 10 when the battery cell is charged at the first preset charge rate until the state of charge is greater than or equal to 95% can be understood as the thickness of the electrode body 10 when the battery cell is charged at the first preset charge rate until the state of charge is equal to 95%, 96%, 97%, or any other value greater than 95%.

For example, the first preset charge rate is C/3.

For example, after the battery cell is charged at the first preset charge rate until the state of charge is greater than or equal to 95%, the battery cell may be charged with a constant voltage, so that the state of charge of the battery cell can be maintained in a state of being greater than or equal to 95% during charging.

When the expansion coefficient Ky of the electrode body 10 is small, it indicates that the content of a high-expansion material in the electrode body 10 is relatively low, resulting in a low energy density of the battery cell. When the expansion coefficient Ky of the electrode body 10 is large, it may cause excessive expansion of the electrode body 10. In this embodiment of the present application, the expansion coefficient Ky of the electrode body 10 is set within the above range, thereby preventing excessive expansion of the electrode body 10 after charging while increasing the energy density of the battery cell.

According to some embodiments of the present application, $0.12 \leq Ky \leq 0.215$.

In this embodiment of the present application, the expansion coefficient Ky of the electrode body 10 is set within the above range, so that the energy density of the battery cell can be further increased, and excessive expansion of the electrode body 10 can be prevented.

In this embodiment of the present application, the expansion coefficient Ky of the electrode body 10 can be calculated by measuring the thickness of the electrode body 10 before and after charging of the battery cell.

According to some embodiments of the present application, the electrode body 10 has a first preset length C1 and a second preset length C2, and an extension coefficient Kx of the electrode body 10 is defined as:

$$Kx = \frac{C2 - C1}{C1}$$, where $0.001 \leq Kx \leq 0.025$, the first preset length C1 is a length of the electrode body 10 when the battery cell is discharged at a second preset discharge rate until the state of charge is less than or equal to 5%, and the second preset length C2 is a length of the electrode body 10 when the battery cell is charged at a second preset charge rate until the state of charge is greater than or equal to 95%.

In this embodiment of the present application, the length of the electrode body 10 refers to a dimension of the electrode body 10 along a first direction X. The thickness of the electrode body 10 refers to a dimension of the electrode body 10 along a second direction Y. The length of the electrode body 10 can be directly measured.

In this embodiment of the present application, the first direction X intersects with the second direction Y. For example, the first direction X is perpendicular to the second direction Y.

After the battery cell is charged, not only is the thickness of the battery cell increased, but also the length of the battery cell increases, that is, the second preset length C2 is greater than the first preset length C1. The extension coefficient Kx of the electrode body 10 is related to the content of the high-expansion material in the electrode body 10, and the higher the content of the high-expansion material in the electrode body 10 is, the larger the extension coefficient Kx of the electrode body 10 is.

For example, the second preset discharge rate is C/3. For example, the second preset charge rate is C/3.

When the extension coefficient Kx of the electrode body 10 is small, it indicates that the content of the high-expansion material in the electrode body 10 is relatively low, resulting in a low energy density of the battery cell. When the extension coefficient Kx of the electrode body 10 is large, it may cause excessive expansion of the electrode body 10. In this embodiment of the present application, the extension coefficient Kx of the electrode body 10 is set within the above range, thereby preventing excessive expansion of the electrode body 10 while increasing the energy density of the battery cell.

According to some embodiments of the present application, $0.005 \leq Kx \leq 0.021$.

In this embodiment of the present application, the extension coefficient Kx of the electrode body 10 is set within the above range, so that the energy density of the battery cell can be further increased, and excessive expansion of the electrode body 10 can be prevented.

In this embodiment of the present application, the extension coefficient Kx of the electrode body 10 can be calculated by measuring the length of the electrode body 10 before and after charging of the battery cell.

According to some embodiments of the present application, the second distance L2 between the electrode body 10 and the connector 30 and the extension coefficient Kx of the electrode body 10 satisfy the following relational expression: $L2 = L1 - a \times C1 \times Kx$, where the second distance L2 between the electrode body 10 and the connector 30 is a distance between the electrode body 10 and the connector 30 when the length of the electrode body 10 is equal to the second preset length C2.

In this embodiment of the present application, the first distance L1 between the electrode body 10 and the connector 30 is a distance between the electrode body 10 and the connector 30 before the battery cell extends, and the second distance L2 between the electrode body 10 and the connector 30 is a distance between the electrode body 10 and the connector 30 after the battery cell extends. Since the length of the electrode body 10 after extension increases, the distance between the electrode body 10 and the connector 30 decreases, that is, the second distance L2 is less than the first distance L1.

The larger the extension coefficient Kx of the electrode body 10 is, the greater the length of the electrode body 10 after extension is, and the shorter the distance between the electrode body 10 and the connector 30 is, that is, the shorter the second distance L2 is.

In this embodiment of the present application, a is a coefficient, and a is related to the position of the tab 20. When the tabs 20 are located on the same side of the electrode body 10, there is a small spacing between the other side of the electrode body 10 opposite to the tabs 20 and the housing 40, so that during extension of the electrode body 10, the electrode body 10 extends more to one side of the tab 20, thereby reducing the second distance L2 At this time, a is equal to 1. When the tabs 20 are located on two opposite sides of the electrode body 10, there is a certain spacing between each of the two sides of the electrode body 10 and the housing 40, so that during extension of the electrode body 10, the electrode body 10 extends to the two sides, thereby reducing L2 on the two sides. At this time, a is equal to 0.5. When the tabs 20 are located on two adjacent sides of the electrode body 10, the value of a is between 0.5 and 1.

In this embodiment of the present application, C1×Kx is an extension length of the electrode body 10, that is, a difference of C2 - C1. Since the length of the housing 40 is constant, the distance between the electrode body 10 and the connector 30 after the electrode body 10 extends, that is, the second distance L2, can be calculated by subtracting the extension length of the electrode body 10 from the first distance L1.

According to some embodiments of the present application, the second distance L2 is greater than or equal to 10 mm. In this way, there is a distance between the electrode body 10 and the connector 30 after the electrode body 10 extends, which can prevent the compression between the electrode body 10 and the connector 30 from affecting the reliability of the battery cell to a certain extent.

According to some embodiments of the present application, an elongation at break K1 of the tab 20 and an elongation K2 of the tab 20 satisfy the following relationship: $\frac{K1}{20} \leq K2 \leq \frac{K1}{5}$.

In this embodiment of the present application, the elongation at break K1 of the tab 20 refers to an elongation of the tab 20 itself from an initial state until it is pulled and broken.

For example, 3 groups of samples may be taken, where the material and thickness of the sample are consistent with those of the tab 20, and the dimension of the sample may be selected to be 5*100 mm or other suitable dimensions; two ends of the sample are clamped by clamping jaws of a tensile machine respectively; the tensile machine is started to make the clamping jaws move away from each other at a speed of 1 mm/min; a dimensional change of the sample when it is pulled and broken is recorded; an average value of the dimensional changes of the 3 groups of samples before and after they are pulled and broken is taken; and the elongation at break K1 of the tab 20 is determined based on a ratio of the average value to the initial dimension.

For example, a spacing between the clamping jaws of the tensile machine in an initial state is less than the length of the sample, so that the sample is not pulled in the initial state. For example, the spacing between the clamping jaws of the tensile machine in the initial state is 50 mm.

In this embodiment of the present application, the elongation K2 of the tab 20 is an actual elongation of the outermost tab (i.e., the tab that is pulled to the greatest extent) after the battery cell expands. The actual elongation can be determined based on a ratio of a difference between the lengths of the outermost tab before and after expansion to the length before expansion, and the length of the tab can be directly measured.

In this embodiment of the present application, the elongation at break K1 of the tab 20 and the elongation K2 of the tab 20 are defined within the above range, so that when the battery cell expands, the tab 20 is not pulled too much, thereby avoiding the breakage of the tab 20.

According to some embodiments of the present application, the elongation K2 of the tab 20, the second distance L2, the second preset thickness D2, the first preset thickness D1, and the first dimension L satisfy:

$$K2 = \sqrt{(b \times L2^2 + D2^2) / (b \times L^2 + D1^2)} - 1.$$

In this embodiment of the present application, the elongation K2 of the tab 20 can be calculated by the above formula.

In this embodiment of the present application, b is a coefficient, and b is related to the shape of the tab 20.

When the second side edges 22 are located in the middles of all the tabs 20 along a thickness direction of the electrode body 10, all the tabs 20 form a shape similar to an isosceles triangle. During expansion of the electrode body 10, the two tabs on the outermost sides are subjected to the same pulling force, and this pulling force is the greatest. At this time, b is equal to 4. When the second side edges 22 are located on the outermost sides of all the tabs 20 along the thickness direction of the electrode body 10, all the tabs 20 form a shape similar to a right triangle. During expansion of the electrode body 10, only one tab is pulled to the greatest extent. At this time, b is equal to 1. When the second side edge 22 is located at other positions along the thickness direction of the electrode body 10, the value of b is between 1 and 4.

According to some embodiments of the present application, the elongation at break K1 of the tab 20 satisfies: 1.4% ≤ K1 ≤ 5%.

In this embodiment of the present application, the elongation at break K1 of the tab 20 is defined within the above range. On one hand, the tab 20 has a certain elongation, so that the tab 20 is not pulled and broken when the battery cell starts to expand. On the other hand, the elongation of the tab 20 is not so excessive as to affect the performance of the tab 20.

According to some embodiments of the present application, the elongation K2 of the tab 20 satisfies: 0.07% ≤ K2 ≤ 1%.

In this embodiment of the present application, the elongation K2 of the tab 20 is defined within the above range. On one hand, the tab 20 has a certain elongation to offset the pulling of the tab 20 when the battery cell expands. On the other hand, the tab can be prevented from being broken prematurely due to defects caused by incoming materials or cutting before reaching the elongation at break.

In this embodiment of the present application, the material of the tab 20 may be an aluminum foil or a copper foil.

For example, when the material of the tab 20 is an aluminum foil, the thickness of the tab 20 is greater than or equal to 13 $\mu$m; and when the material of the tab 20 is a copper foil, the thickness of the tab 20 is greater than or equal to 6 $\mu$m.

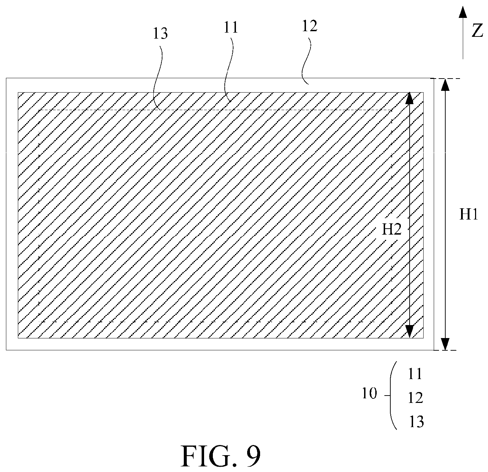

FIG. 9 is a partial schematic diagram of an electrode body provided in some embodiments of the present application. Referring to FIG. 9, the electrode body 10 includes a positive electrode sheet 11, where an elongation K3 of the positive electrode sheet 11 satisfies: 1% ≤ K3 ≤ 2.5%.

In this embodiment of the present application, the dimension of the battery cell changes when the battery cell expands, so that the dimension of the positive electrode sheet 11 also changes, that is, the positive electrode sheet 11 elongates.

For example, the elongation K3 of the positive electrode sheet 11 is a ratio of a difference between a height of the positive electrode sheet 11 after expansion and a height of the positive electrode sheet before expansion to the height of the positive electrode sheet 11 before expansion. The height of the positive electrode sheet 11 is a dimension of the positive electrode sheet 11 in a height direction Z of the battery cell.

In this embodiment of the present application, the height direction Z of the battery cell may be parallel to the first direction X.

In this embodiment of the present application, the elongation K3 of the positive electrode sheet 11 is defined within the above range. On one hand, the positive electrode sheet 11 elongates when the battery cell expands, to meet the requirement of the dimension of the battery cell after expansion. On the other hand, it can be avoided to a certain extent that the battery cell expands too much to affect the reliability of the battery cell.

According to some embodiments of the present application, referring to FIG. 9, the electrode body 10 further includes a separator 12, where the separator 12 is laminated with the positive electrode sheet 11, and a first height H1 of the separator 12, a second height H2 of the positive electrode sheet 11, and the elongation K3 of the positive electrode sheet 11 satisfy:

$$\frac{H1 - (1 + K3)H2}{2} \geq 3mm$$

, where the first height H1 of the separator 12 is a dimension of the separator 12 in the height direction Z of the battery cell, and the second height H2 of the positive electrode sheet 11 is a dimension of the positive electrode sheet 11 in the height direction Z of the battery cell.

In the current battery, the dimension of the separator 12 exceeds the dimension of the positive electrode sheet 11, so that the positive electrode sheet 11 and the negative electrode sheet 13 are insulated from each other. As ions are intercalated into or deintercalated from the active material during charge-discharge cycles of a battery, the battery cell swells, that is, the positive electrode sheet 11 expands outward. The dimension of the positive electrode sheet after expansion may exceed the dimension of the separator, which brings about a safety problem.

In this embodiment of the present application, (1 + K3) H2 is a height of the positive electrode sheet 11 after expansion, and H1 - (1 + K3) H2 is a height difference between the separator 12 and the positive electrode sheet 11 after expansion.

In this embodiment of the present application, the above relational expression is set. In this way, after the battery cell expands, the first height H1 of the separator 12 is still greater than the second height H2 of the positive electrode sheet 11, so that the dimension of the positive electrode sheet does not exceed the dimension of the separator, and the problem of a short circuit caused by contact between the expanded positive electrode sheet 11 and the negative electrode sheet 13 can be avoided to some extent.

According to some embodiments of the present application, the first height H1 of the separator 12, the second height H2 of the positive electrode sheet 11, the elongation K3 of the positive electrode sheet 11, and the second distance L2 between the electrode body 10 and the connector 30 satisfy: $\frac{H1 - (1 + K3)H2}{2} \leq L2$, where the second distance L2 between the electrode body 10 and the connector 30 is a distance between the electrode body 10 and the connector 30 when the length of the electrode body 10 is equal to the second preset length C2.

The larger H1 - (1 + K3) H2 is, the more the separator 12 exceeds the positive electrode sheet 11, and the larger the dimension of the separator 12 is, so that the separator 12 is likely to abut against the connector 30 after the battery cell expands, causing the separator 12 to bend. By defining the above relational expression, the bending of the separator 12 caused by the larger dimension of the separator 12 can be avoided to a certain extent.

According to some embodiments of the present application, the electrode body 10 includes a positive electrode sheet 11, where the positive electrode sheet 11 includes a high-expansion material with a mass percentage of greater than or equal to 25% and less than or equal to 100%.

The active material of the positive electrode sheet 11 may include a high-expansion material. In some embodiments, the high-expansion material may be a silicon-based material. The silicon-based negative electrode material has advantages such as a high theoretical specific capacity, a low delithiation potential, environmental friendliness, an abundant reserve, and a low cost. Silicon expands more easily during charge and discharge because a silicon crystal has a regular tetrahedral structure (graphite has a layered structure). According to some embodiments of the present application, through the percentage of the silicon-based material in the positive electrode sheet 11, the energy density of the battery cell can be effectively increased, thereby improving the performance of the battery cell.

In this embodiment of the present application, the mass percentage of the high-expansion material is greater than or equal to 25% and less than or equal to 50%.

By further selecting the percentage of the silicon-based material in the active material of the positive electrode sheet 11, the stability and reliability of the battery cell are improved while the energy density of the battery cell is ensured to some extent.

In some embodiments, the silicon-based material is selected from at least one of elemental silicon, a silicon-oxygen compound, a silicon-carbon composite, a silicon-nitrogen composite, and a silicon alloy.

The elemental silicon may be pure silicon, such as a silicon nanoparticle, a silicon nanowire, and a silicon nanotube with nanometer-level dimensions. The silicon-oxygen compound may be silicon monoxide (SiOx) of a composite of silicon and silicon dioxide. The silicon-carbon composite may be a silicon-carbon complex (Si/C) formed by coating the surface of silicon with carbon. The silicon-nitrogen composite may be a composite of silicon monoxide and nitrogen-doped carbon, a silicon-carbon nitride composite, or a composite material of carbon coated with nano silicon nitrogen. It can be understood that the silicon-based materials listed in this embodiment are only for illustrative purposes and do not serve as a limitation on the silicon-based material in this embodiment. The use of the silicon-based material as the negative electrode material of the battery cell can improve the energy density of the battery cell and improve the battery performance.

In some embodiments of the present application, when the mass percentage of SiOx is 25%, the expansion coefficient Ky of the electrode body 10 is greater than or equal to 0.12 and less than or equal to 0.15, and when the mass percentage of SiOx is 50%, the expansion coefficient Ky of the electrode body 10 is greater than or equal to 0.18 and less than or equal to 0.215.

In some embodiments of the present application, when the mass percentage of SiOx is 25%, the extension coefficient Kx of the electrode body 10 is greater than or equal to 0.005 and less than or equal to 0.015, and when the mass percentage of SiOx is 50%, the expansion coefficient Ky of the electrode body 10 is greater than or equal to 0.013 and less than or equal to 0.0248.

An embodiment of the present application provides a battery, including the battery cell in the above embodiment.

In the battery, a plurality of battery cells may be provided, and the plurality of battery cells may be subjected to series connection, parallel connection, or series-parallel connection. The series-parallel connection means that the plurality of battery cells are subjected to both series connection and parallel connection. The plurality of battery cells may be subjected to series connection, parallel connection, or series-parallel connection directly, and then a combination formed by the plurality of battery cells is accommodated in a box. Certainly, the battery may also be formed in a manner that the plurality of battery cells are first subjected to series connection, parallel connection, or series-parallel connection to form battery modules, then the plurality of battery modules are subjected to series connection, parallel connection, or series-parallel connection to form a combination, and the combination is accommodated in the box. The battery may further include other structures. For example, the battery may include a current converging component for implementing an electrical connection between the plurality of battery cells. According to the battery provided in this embodiment of the present application, the possibility that the tab is pulled and torn can be reduced, thereby improving the stability and reliability of the battery.

An embodiment of the present application provides an electric device, including the battery in the above embodiment that is configured to provide electric energy; or including the battery cell in any one of the above embodiments that is configured to provide electric energy. According to the electric device provided in this embodiment of the present application, the possibility that the tab is pulled and torn can be reduced, thereby improving the stability and reliability of the electric device.

An embodiment of the present application provides a battery cell, including an electrode body 10, tabs 20, and connectors 30. The tab 20 has a first side edge 21 and a second side edge 22 opposite to each other, where the first side edge 21 of the tab 20 is connected to the electrode body 10, and the connector 30 is connected to the second side edge 22 of the tab 20. A bending portion is provided between the first side edge 21 and the second side edge 22 of the tab 20.

The electrode body 10 has a first preset thickness D1 and a second preset thickness D2. The first preset thickness D1 is a thickness of the electrode body 10 when the battery cell is discharged at a first preset discharge rate until a state of charge is less than or equal to 5%. The second preset thickness D2 is a thickness of the electrode body 10 when the battery cell is charged at a first preset charge rate until the state of charge is greater than or equal to 95%. A first dimension L of the tab 20 and a first distance L1 between the electrode body 10 and the connector 30 satisfy the following relationship:

$$\frac{L - L1}{L} \leq 0.35$$. The first dimension L is an extension length of the tab 20 from a side where the first side edge 21 is located to a side where the second side edge 22 is located.

An expansion coefficient Ky of the electrode body 10 is defined as: $Ky = \dfrac{D2 - D1}{D1}$, where $0.12 \leq Ky \leq 0.215$. The electrode body 10 has a first preset length C1 and a second preset length C2. An extension coefficient Kx of the electrode body 10 is defined as: $Kx = \dfrac{C2 - C1}{C1}$, where $0.005 \leq Kx \leq 0.021$. The first preset length C1 is a length of the electrode body 10 when the battery cell is discharged at a second preset discharge rate until the state of charge is less than or equal to 5%. The second preset length C2 is a length of the electrode body 10 when the battery cell is charged at a second preset charge rate until the state of charge is greater than or equal to 95%.

The first distance L1 and a second distance L2 between the electrode body 10 and the connector 30, the extension coefficient Kx of the electrode body 10, and the first preset length C1 satisfy the following relation: $L2 = L1 - a \times C1 \times Kx$, where a is greater than or equal to 0.5 and less than or equal to 1. The second distance L2 is greater than or equal to 10 mm. An elongation at break K1 of the tab 20 and an elongation K2 of the tab 20 satisfy the following relationship: $\dfrac{K1}{20} \leq K2 \leq \dfrac{K1}{5}$. The elongation at break K1 of the tab 20 satisfies: $1.4\% \leq K1 \leq 5\%$. The elongation K2 of the tab 20 satisfies: $0.07\% \leq K2 \leq 1\%$. The elongation at break K1 of the tab 20, the second distance L2, the second preset thickness D2, the first preset thickness D1, and the first dimension L satisfy:

$$K2 = \sqrt{(b \times L2^2 + D2^2) / (b \times L^2 + D1^2)} - 1$$, where

b is greater than or equal to 1 and less than or equal to 4. The electrode body 10 includes a positive electrode sheet 11 and a separator 12, where the separator 12 is laminated with the positive electrode sheet 11, and an elongation K3 of the positive electrode sheet 11 satisfies: $1\% \leq K3 \leq 2.5\%$. A first height H1 of the separator 12, a second height H2 of the positive electrode sheet 11, and the elongation K3 of the positive electrode sheet 11

satisfy: $\dfrac{H1 - (1 + K3)H2}{2} \geq 3mm$ and

$\dfrac{H1 - (1 + K3)H2}{2} \leq L2$, where the first height H1 of the separator 12 is a dimension of the separator 12 in a height direction Z of the battery cell, and the second height H2 of the positive electrode sheet 11 is a dimension of the positive electrode sheet 11 in the height direction Z of the battery cell.

The electrode body 10 includes a positive electrode sheet 11, where the positive electrode sheet 11 includes a high-expansion material with a mass percentage of greater than or equal to 25% and less than or equal to 50%.

Finally, it should be noted that the above embodiments are only for the purpose of illustrating the technical solutions of the present application and are not to be construed as limiting the present application. Although the present application has been described in detail with reference to the above embodiments, it should be understood by a person of ordinary skill in the art that modifications may be made to the technical solutions described in the above embodiments, or equivalent replacement may be made to some or all of the technical features thereof. However, the modifications or replacements do not make the nature of corresponding technical solutions depart from the scope of the technical solutions of the embodiments of the present application, all of which shall fall within the scope of the claims and the description of the present application. In particular, the technical features mentioned in the embodiments may be combined in any manner provided that there is no structural conflict. The present application is not limited to the specific embodiments disclosed herein, but includes all technical solutions falling within the scope of the claims.

**Claims**

1.  A battery cell, comprising:

    an electrode body (10);
    tabs (20) each having a first side edge (21) and a second side edge (22) opposite to each other, the first side edge (21) of the tab (20) being connected to the electrode body (10); and
    connectors (30) each connected to the second side edge (22) of the tab (20),
    wherein a bending portion is provided between the first side edge (21) and the second side edge (22) of the tab (20).

2.  The battery cell according to claim 1, wherein a first dimension L of the tab (20) and a first distance L1 between the electrode body (10) and the connector (30) satisfy the following relationship: $\dfrac{L - L1}{L} \leq 0.35$, wherein the first dimension L is an extension length of the tab (20) from a side where the first side edge (21) is located to a side where the second side edge (22) is located.

3.  The battery cell according to claim 2, wherein the first dimension L and the first distance L1 satisfy the following relationship: $1.05L\,1 \leq L \leq 1.2L\,1$.

4.  The battery cell according to claim 2 or 3, wherein the electrode body (10) has a first preset thickness D1 and a second preset thickness D2, and an expansion coefficient Ky of the electrode body (10) is defined as: $Ky = \dfrac{D2 - D1}{D1}$,

    wherein $0.04 \leq Ky \leq 0.23$, the first preset thickness D1 is a thickness of the electrode body (10) when the battery cell is discharged at a first preset discharge rate until a state of charge is less than or equal to 5%, and the second preset thickness D2 is a thickness of the electrode body (10) when the battery cell is charged at a first preset charge rate until the state of charge is greater than or equal to 95%.

5.  The battery cell according to claim 4, wherein $0.12 \leq Ky \leq 0.215$.

6.  The battery cell according to claim 4 or 5, wherein the electrode body (10) has a first preset length C1 and a second preset length C2, and an extension coefficient Kx of the electrode body (10) is defined as: $Kx = \dfrac{C2 - C1}{C1}$,

    wherein $0.001 \leq Kx \leq 0.025$, the first preset length C1 is a length of the electrode body (10) when the battery cell is discharged at a second preset discharge rate until the state of charge is less than or equal to 5%, and the second preset length C2 is a length of the electrode body (10) when the battery cell is charged at a second preset charge rate until the state of charge is greater than or equal to 95%.

7. The battery cell according to claim 6, wherein $0.005 \leq Kx \leq 0.021$.

8. The battery cell according to claim 6 or 7, wherein a second distance L2 between the electrode body (10) and the connector (30) and the extension coefficient Kx of the electrode body (10) satisfy the following relational expression: $L2 = L1 - a \times C1 \times Kx$, wherein the second distance L2 between the electrode body (10) and the connector (30) is a distance between the electrode body (10) and the connector (30) when the length of the electrode body (10) is equal to the second preset length C2, and a is greater than or equal to 0.5 and less than or equal to 1.

9. The battery cell according to claim 8, wherein the second distance L2 is greater than or equal to 10 mm.

10. The battery cell according to claim 8 or 9, wherein an elongation at break K1 of the tab (20) and an elongation K2 of the tab (20) satisfy the following relationship: $\dfrac{K1}{20} \leq K2 \leq \dfrac{K1}{5}$.

11. The battery cell according to claim 10, wherein the elongation K2 of the tab (20), the second distance L2, the second preset thickness D2, the first preset thickness D1, and the first dimension L satisfy:

$$K2 = \sqrt{\left(b \times L2^2 + D2^2\right) / \left(b \times L^2 + D1^2\right)} - 1 ,$$

wherein b is greater than or equal to 1 and less than or equal to 4.

12. The battery cell according to claim 10 or 11, wherein the elongation at break K1 of the tab (20) satisfies: $1.4\% \leq K1 \leq 5\%$.

13. The battery cell according to any one of claims 10 to 12, wherein the elongation K2 of the tab (20) satisfies: $0.07\% \leq K2 \leq 1\%$.

14. The battery cell according to any one of claims 1 to 13, wherein the electrode body (10) comprises a positive electrode sheet (11), and an elongation K3 of the positive electrode sheet (11) satisfies: $1\% \leq K3 \leq 2.5\%$.

15. The battery cell according to claim 14, wherein the electrode body (10) further comprises a separator (12), the separator (12) is laminated with the positive electrode sheet (11), and a first height H1 of the separator (12), a second height H2 of the positive electrode sheet (11), and the elongation K3 of the positive electrode sheet (11) satisfy:

$$\frac{H1 - (1 + K3)H2}{2} \geq 3mm ,$$

wherein the first height H1 of the separator 12 is a dimension of the separator (12) in a height direction Z of the battery cell, and the second height H2 of the positive electrode sheet (11) is a dimension of the positive electrode sheet (11) in the height direction Z of the battery cell.

16. The battery cell according to claim 15, wherein the first height H1 of the separator (12), the second height H2 of the positive electrode sheet (11), the elongation K3 of the positive electrode sheet (11), and the second distance L2 between the electrode body (10) and the connector (30) satisfy:

$$\frac{H1 - (1 + K3)H2}{2} \leq L2 ,$$

wherein the second distance L2 between the electrode body (10) and the connector (30) is a distance between the electrode body (10) and the connector (30) when the length of the electrode body (10) is equal to the second preset length C2, and the second preset length C2 is a length of the electrode body (10) when the battery cell is charged at the second preset charge rate until the state of charge is greater than or equal to 95%.

17. The battery cell according to any one of claims 1 to 13, wherein the electrode body (10) comprises a positive electrode sheet (11), and the positive electrode sheet (11) comprises a high-expansion material with a mass percentage of greater than or equal to 25% and less than or equal to 100%.

18. The battery cell according to claim 17, wherein the mass percentage of the high-expansion material is greater than or equal to 25% and less than or equal to 50%.

19. A battery, comprising the battery cell according to any one of claims 1 to 18.

20. An electric device, comprising the battery according to claim 19 that is configured to provide electric energy;
or comprising the battery cell according to any one of claims 1 to 18 that is configured to provide electric energy.

FIG. 1

FIG. 2

FIG. 3

FIG. 4

FIG. 5

FIG. 6

FIG. 7

FIG. 8

FIG. 9

## INTERNATIONAL SEARCH REPORT

| International application No. |
| --- |
| **PCT/CN2024/073838** |

| A. | CLASSIFICATION OF SUBJECT MATTER |
| --- | --- |

H01M50/533(2021.01)i; H01M50/528(2021.01)i

According to International Patent Classification (IPC) or to both national classification and IPC

| B. | FIELDS SEARCHED |
| --- | --- |

Minimum documentation searched (classification system followed by classification symbols)

IPC : H01M

Documentation searched other than minimum documentation to the extent that such documents are included in the fields searched

Electronic data base consulted during the international search (name of data base and, where practicable, search terms used)

CNTXT; ENTXT; ENTXTC; DWPI; CNKI: 电池, 电芯, 极耳, 端子, 弯折, 折弯, 弯曲, 延伸, 延展, battery, core, tab, electrode, bend, fold, extend

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 116190934 A (NINGDE CONTEMPORARY AMPEREX TECHNOLOGY CO., LTD.) 30 May 2023 (2023-05-30) entire document | 1-20 |
| X | CN 215816293 U (EVERGRANDE NEW ENERGY TECHNOLOGY (SHENZHEN) CO., LTD.) 11 February 2022 (2022-02-11) description, paragraphs 36-53, and figures 2 and 6 | 1, 14, 17-20 |
| X | JP 2020013752 A (TOYOTA INDUSTRIES CORP.) 23 January 2020 (2020-01-23) description, paragraphs 18-61, and figures 3-4 | 1, 14, 17-20 |
| X | WO 2023050388 A1 (CONTEMPORARY AMPEREX TECHNOLOGY CO., LTD.) 06 April 2023 (2023-04-06) description, paragraphs 66-131, and figures 4-7 | 1, 14, 17-20 |
| A | CN 115411223 A (ZHONGCHUANG XINHANG TECHNOLOGY RESEARCH CENTER (SHENZHEN) CO., LTD. et al.) 29 November 2022 (2022-11-29) entire document | 1-20 |

| ☐ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **01 April 2024** | **11 April 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/073838**

| Patent document cited in search report | | | Publication date (day/month/year) | Patent family member(s) | | | Publication date (day/month/year) |
|---|---|---|---|---|---|---|---|
| CN | 116190934 | A | 30 May 2023 | CN | 116190934 | B | 29 August 2023 |
| CN | 215816293 | U | 11 February 2022 | None | | | |
| JP | 2020013752 | A | 23 January 2020 | None | | | |
| WO | 2023050388 | A1 | 06 April 2023 | JP | 2023547983 | A | 15 November 2023 |
| | | | | KR | 20230053657 | A | 21 April 2023 |
| | | | | EP | 4254641 | A1 | 04 October 2023 |
| | | | | US | 2023261334 | A1 | 17 August 2023 |
| | | | | CN | 116897464 | A | 17 October 2023 |
| CN | 115411223 | A | 29 November 2022 | CN | 115411223 | B | 24 March 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310458517